# EUROPEAN PATENT APPLICATION

(11) **EP 3 043 251 A1**
(43) Date of publication of application: **13.07.2016**
(21) Application number: 16150278.6
(22) Date of filing: 06.01.2016
(51) Int. Cl.: G06F 3/0481, G06F 3/0488

(54) **METHOD OF DISPLAYING CONTENT AND ELECTRONIC DEVICE IMPLEMENTING SAME**

(30) Priority: 06.01.2015 KR 20150001065
(71) Applicant: Samsung Electronics Co., Ltd., Gyeonggi-do 16677 (KR)
(72) Inventor: Kim, Kyungtae, 16677 Gyeonggi-do (KR)
(74) Representative: Lubberdink, Pim

(57) **Abstract**

An electronic device is provided. The electronic device includes a storage configured to store content, a display component configured to display, on a screen, at least a part of the content of which a layout has been determined, and a controller configured to determine at least one area of the content as a first main area, and to determine a layout width of the content such that a width of the first main area is narrower than or equal to a viewport width of the screen.

## Description

### TECHNICAL FIELD

The present disclosure relates to an electronic device which can display content.

### BACKGROUND

In general, electronic devices such as a smart phone, a tablet personal computer (PC), and the like may display content (for example, electronic documents) on a screen. At this time, the electronic document (for example, a webpage) may be larger than the screen and, accordingly, only a part of the electronic document may be displayed on the screen. The electronic device may move a display area of a webpage in response to a user input (for example, a drag by an input object (for example, a finger, a pen, or the like) on the touch screen) and display another part of the webpage.

The above information is presented as background information only to assist with an understanding of the present disclosure. No determination has been made, and no assertion is made, as to whether any of the above might be applicable as prior art with regard to the present disclosure.

### SUMMARY

A webpage is made in, for example, a cascading style sheet (CSS) or a hyper text markup language (HTML). An electronic device may re-arrange and display content areas of the webpage based on a width (breadth) of the screen (in other words, a viewport). A re-arrangement method is conventionally defined according to an environment of a desktop personal computer (PC) having a screen of which the width is longer than the height.

However, since the width and the height are flexible in a mobile environment (that is, since the width and the height are reversed through a rotation of the screen by the user), there are goals which may not be met by the general re-arrangement method. In order to meet the goals, the following re-arrangement methods may be used. For example, techniques such as fixed layout, viewport meta tag, or device scale factor may be used.

Fixed layout: when a portable device is in a portrait mode (that is, the screen is placed so that the width is shorter than the height), one or more content areas of the webpage may be placed to be vertically long. In contrast, when the portable device is in a landscape mode, the content areas of the webpage may be placed to be horizontally long. However, regardless of the mode switching, there may be a demand to fix the width of the webpage. For example, 980 pixel (px), which has been empirically obtained, may be defined as the layout width of the webpage.

Viewport meta tag: when a tag "<meta name='viewport' content='width=device-width'>" is added to the webpage, the portable device may configure the layout of the webpage such that the layout width of the webpage fits the viewport width of the screen and display the webpage.

Scale factor: the portable device may have a high resolution screen. For example, although a first portable device and a second portable device have the same screen size, the second portable device may implement a higher resolution compared to the first portable device. Some webpages may be arranged and displayed to fit the width of the screen in the first portable device (that is, the viewport width and the layout width are the same) and may be arranged and displayed to be narrower than the width of the screen in the second portable device (that is, the viewport width is narrower than the layout width). That is, the screen of the second portable device may have a blank space. Accordingly, the second portable device may control a scale factor to reduce the resolution and display the webpage. For example, when the resolution of the device is 640x960, if the scale factor, that is, a pixel ratio of the corresponding device is configured as 2, a logical size of the device is 320x480. That is, the viewport width is logically reduced to 320 from 640. Accordingly, the corresponding device may display the webpage in the same way the device having the resolution of 320x480 displays the webpage.

According to the above technologies, the webpage, which does not sufficiently consider attributes (for example, resolution) of various electronic devices, may display content in a form which is not suitable for the attributes (for example, resolution) of the electronic device. Particularly, a screen of a high resolution device (for example, 16:9, 16:10) may have a blank space. For example, a scale factor of a device having the resolution 2560x1600 of 16:10 may be configured as 2 or 2.5. When the scale factor is configured as 2, the logical size of the screen is 1280x800. "1280" may not be suitable for expressing the webpage. For example, when the corresponding device is in a landscape mode (that is, 1280 is configured as the width) and the width of the webpage is 980, the screen may have blank spaces on left and right sides. When the scale factor is configured as 2.5, the logical size of the screen is 1024*640. "640" may not be suitable for expressing the webpage. For example, when the corresponding device is in a portrait mode (that is, 640 is configured as the width) and the width of the webpage is 980, the screen has no blank space but only a part of the webpage may be displayed on the screen.

Meanwhile, content may be divided into a plurality of content areas. Each content area corresponds to a part of the electronic document, i.e. the content of the electronic document is divided over a plurality of segments, each segment holding a part of the content. For example, an area may correspond to an HTML element which holds a part of the content of a webpage. The areas may alternatively be referred to as "compositions", "content blocks", "content segments", "regions of the content" or "content elements". At least one of the areas may be classified as the main area. For example, between an article and an advertisement in the webpage, the article may be classified as the main area.

Aspects of the present disclosure are to address at least the above-mentioned problems and/or disadvantages and to provide at least the advantages described below. Accordingly, an aspect of the present disclosure is to provide a method of displaying content adaptively according to the screen size and an electronic device implementing the same.

Another aspect of the present disclosure is to provide a method of first displaying the main area of the content and an electronic device implementing the same.

In accordance with an aspect of the present disclosure, an electronic device is provided. The electronic device includes a storage configured to store content divided into a plurality of areas, a display component configured to display, on a screen, at least a part of the content of which a layout has been determined, and a controller configured to determine at least one area of the content as a main area, and to determine a layout width of the content such that a width of the main area is narrower than or equal to a viewport width of the screen.

In accordance with another aspect of the present disclosure, a method of displaying content in an electronic device comprising a screen is provided, wherein the content is divided into a plurality of areas. The method includes determining a layout of the content, determining at least one area of the content as a main area, determining a layout width of the content such that a width of the main area is narrower than or equal to a viewport width of the screen of the electronic device, and displaying, on the screen, the first main area of the content.

According to various embodiments of the present disclosure, an important main area among areas of content may be first displayed to a user. Further, various pieces of additional information may be displayed together with the main area. Moreover, a method and an electronic device according to various embodiments of the present disclosure can prevent left and right boundaries of the main area from escaping from left and right sides of the screen when the user scrolls the contents, thereby providing the user with convenience to see the content mainly on a main area basis. Furthermore, a method and an electronic device according to various embodiments of the present disclosure can automatically expand the main area to fit the screen width when a target to be zoomed-in by the user corresponds to the main area, thereby providing the user with convenience to see the content primarily on a main area basis.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other objects, features, and advantages of certain embodiments of the present disclosure will be more apparent from the following description taken in conjunction with the accompanying drawings, in which:
FIG. 1 is a block diagram illustrating a configuration of an electronic device according to various embodiments of the present disclosure;
FIG. 2 is a flowchart illustrating a content display method according to various embodiments of the present disclosure;
FIG. 3 illustrates an example of a content layout and a method of determining a main area according to an embodiment of the present disclosure;
FIG. 4 illustrates another example of the content layout and a method of determining a main area according to an embodiment of the present disclosure;
FIGS. 5A and 5B illustrate another example of the content layout and a method of re-configuring the content layout according to an embodiment of the present disclosure;
FIG. 6 illustrates another example of the content layout and an example unsuitable for the main area according to an embodiment of the present disclosure;
FIGS. 7A and 7B illustrate screens for describing a layout re-configuration method according to an embodiment of the present disclosure;
FIGS. 8A and 8B illustrate screens for describing a method of zooming a main area in a webpage according to an embodiment of the present disclosure;
FIGS. 9A to 9D illustrate screens for describing a method of displaying additional information in a blank space existing next to the main area in the webpage according to an embodiment of the present disclosure;
FIG. 10 is a flowchart illustrating a method of moving content according to various embodiments of the present disclosure;
FIGS. 11A to 11C illustrate an example of a method of moving content while boundaries of the main area do not escape from the screen according to an embodiment of the present disclosure;
FIGS. 12A and 12B illustrate another example of the method of moving content while the boundary of the main area does not escape from the screen according to an embodiment of the present disclosure;
FIG. 13 is a flowchart illustrating a method of expanding the main area to fit the screen width according to various embodiments of the present disclosure; and
FIGS. 14A and 14B illustrate an example of a method of automatically controlling the main area of the content to fit the screen width according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" refers to the existence of a corresponding disclosed function, operation or component which can be used in various embodiments of the present disclosure and does not limit one or more additional functions, operations, or components. In the present disclosure, the terms such as "include" or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

The term "or" used in various embodiments of the present disclosure includes any or all of combinations of listed words. For example, the expression "A or B" may include A, may include B, or may include both A and B.

The expressions such as "first", "second", or the like used in various embodiments of the present disclosure may modify various component elements in the various embodiments of the present disclosure but may not limit corresponding component elements. For example, the above expressions do not limit the sequence and/or importance of the elements. The above expressions are used merely for the purpose of distinguishing an element from the other elements. For example, without departing from the scope of the present disclosure, a first component element may be named a second component element. Similarly, the second component element also may be named the first component element.

The terms in various embodiments of the present disclosure are used to describe a specific embodiment of the present disclosure, and are not intended to limit the present disclosure. As used herein, the singular forms are intended to include the plural forms as well, unless the context clearly indicates otherwise

Unless defined differently, all terms used herein, which include technical terminologies or scientific terminologies, have the same meaning as a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

An electronic device according to various embodiments of the present disclosure has a function of receiving a content from an external device and displaying the received content. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), an Moving Picture Experts Group phase 1 or phase 2 (MPEG-1 or MPEG-2) audio layer 3 (MP3) player, a mobile medical device, a camera, a wearable device (for example, a head-mounted-device (HMD) such as electronic glasses, electronic clothes, an electronic bracelet, an electronic necklace, an electronic appcessory, an electronic tattoo, and a smart watch.

According to various embodiments of the present disclosure, the electronic device may be a smart home appliance that has a function of receiving a content from an external device and displaying the received content. The smart home appliances may include at least one of, for example, televisions, digital versatile disk (DVD) players, audio players, refrigerators, air conditioners, cleaners, ovens, microwaves, washing machines, air purifiers, set-top boxes, TV boxes (e.g., HomeSync™ of Samsung, Apple TV™, or Google TV™), game consoles, electronic dictionaries, electronic keys, camcorders, or electronic frames

According to another embodiment of the present disclosure, the electronic devices may include at least one of various medical devices (e.g., a magnetic resonance angiography (MRA), a magnetic resonance imaging (MRI), a computed tomography (CT) machine, and an ultrasonic machine), navigation devices, global positioning system (GPS) receivers, event data recorders (EDR), flight data recorders (FDR), vehicle infotainment devices, electronic devices for ships (e.g., navigation devices for ships, and gyro-compasses), avionics, security devices, automotive head units, robots for home or industry, automatic teller's machines (ATMs) in banks, or point of sales (POS) in shops.

According to various embodiments of the present disclosure, the electronic device may include at least one of furniture or a part of a building/structure, an electronic board, an electronic signature receiving device, a projector, and various types of measuring devices (for example, a water meter, an electric meter, a gas meter, a radio wave meter and the like) including a camera function. An electronic device according to various embodiments of the present disclosure may be a combination of one or more of above described various devices. Also, an electronic device according to various embodiments of the present disclosure may be a flexible device. Also, an electronic device according to various embodiments of the present disclosure is not limited to the above described devices.

Hereinafter, various embodiments of the present disclosure will be described with reference to the accompanying drawings.

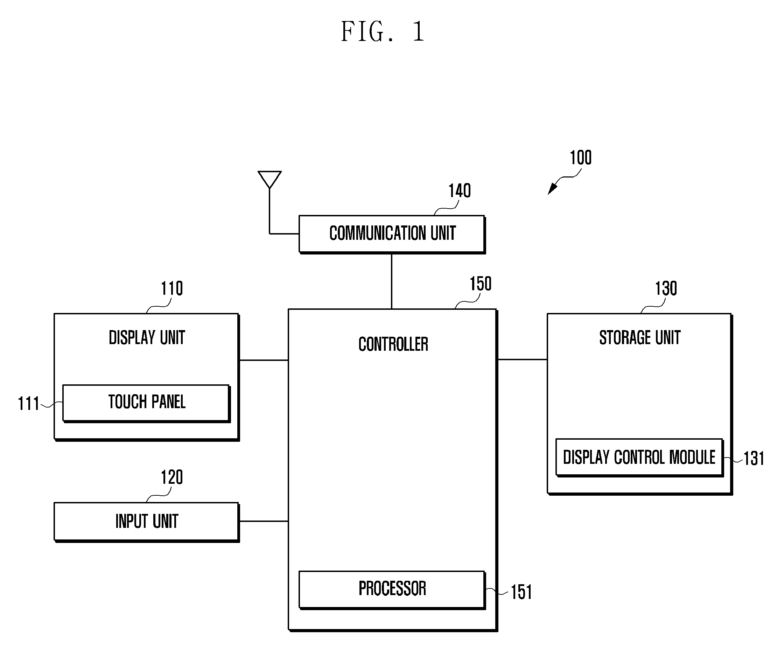

FIG. 1 is a block diagram illustrating a configuration of an electronic device according to various embodiments of the present disclosure.

Referring to FIG. 1, an electronic device 100 according to various embodiments of the present disclosure may include a display unit 110, an input unit 120, a storage unit 130, a communication unit 140, and a controller 150.

The display unit 110 may display content on a content screen under a control of the controller 150. For example, the controller 150 processes (for example, enlarges, reduces, and the like) a webpage and stores the processed webpage in a memory (for example, a frame buffer). The display unit 110 may convert a part of the webpage stored in the frame buffer to an analog signal and display the analog signal on the screen.

The display unit 110 may include a display panel or a hologram. The display panel may be, for example, a liquid crystal display (LCD), an active matrix organic light emitting diode (AM-OLED), or the like. The display panel may be implemented to be, for example, flexible, transparent, or wearable. The hologram may show a three-dimensional image in the air using interference of light. The display unit 110 may further include a control circuit for controlling the display panel or the hologram.

The display panel may include a "touch panel 111" which is an input unit for an interaction between the user and the electronic device 100. Then, the display unit 110 may be interchangeable with a touch screen.

The touch panel 111 may be implemented in an add-on type in which the touch panel 111 is located on the screen of the display unit 110, or an on-cell type or an in-cell type in which the touch panel 111 is inserted into the display unit 110. The touch panel 111 may detect a user input in at least one of, for example, a capacitive type, resistive type, an infrared type, and an ultrasonic wave type, generate an event corresponding to the user input, and transfer the generated event to the controller 150.

The touch panel 111 may detect a gesture of a conductive object, that is, an input object (for example, a finger or a stylus) which directly contacts the screen or is proximate or hovered within a predetermined range in which the touch panel 111 can detect the object. The touch panel 111 may generate an event corresponding to the gesture and transfer the generated event to the controller 150.

The input unit 120 may include, for example, a touch key which is different from the touch panel 111 installed in the display unit 110. The touch key may recognize a touch or proximity of a human body and an object. The input unit 120 may generate an event in response to a user input and transfer the generated event to the controller 150. The input unit 120 may further include a key (for example, a dome key) in one type different from the touch type. For example, when the user presses the dome key, the dome key is transformed to contact a printed circuit board and, accordingly, a key event is generated on the printed circuit board and transmitted to the controller 150.

The storage unit 130 may store data (for example, a message and a webpage) generated by the electronic device 100 or received from an external device through the communication unit 140 under a control of the controller 150. The storage unit 130 stores a booting program, at least one operating system, and applications. The storage unit 130 stores various pieces of setting information (for example, setting information on screen brightness or the like) for setting a user environment of the electronic device 100. Accordingly, the controller 150 may operate the electronic device 100 with reference to the setting information.

The storage unit 130 may include a main memory and a secondary memory. The main memory may be implemented by, for example, a random access memory (RAM). The secondary memory may be implemented by a disc, a RAM, a read only memory (ROM), or a flash memory. The main memory may store various programs loaded from the secondary memory, for example, the booting program, the operating system (for example, a kernel), middleware, an application programming interface (API), and an application. When power of the battery is supplied to the controller 150, the booting program may be first loaded to the main memory. The booting program may load the operating system to the main memory. The operating system may load the application to the main memory. The controller 150 may access the main memory to decipher a command (routine) of a program, and execute a function according to a result of the decipherment.

The storage unit 130 may also further include an external memory. For example, the storage unit 130 may further include compact flash (CF), secure digital (SD), micro-SD, mini-SD, extreme digital (xD), or a memory stick, as the external memory.

According to various embodiments of the present disclosure, the storage unit 130 may store a display control module 131. The display control module 131 may be configured to allow the controller 150 to perform a function of controlling displaying of the contents.

The communication unit 140 may perform voice call, video call, or data communication with an external device through a network under the control of the controller 150. The communication unit 140 may include a cellular module (for example, a communication module providing voice call, video call, text message service, or the Internet service through a communication network (for example, long-term evolution (LTE), LTE-advanced (LTE-A), code division multiple access (CDMA), wideband CDMA (WCDMA), universal mobile telephone system (UMTS), wireless broadband (WiBro), or global system/standard for mobile communication (GSM)), a digital broadcast module (for example, a digital multimedia broadcasting (DMB) module), and a short range communication module (for example, a Wi-Fi module, a Bluetooth module, and a near field communication (NFC) module)).

The controller 150 controls general operations of the electronic device 100 and a signal flow between internal components of the electronic device 100, process data, and controls power supply to the components from the battery.

The controller 150 may include a processor 151. The processor 151 may include an application processor (AP), a communication processor (CP), a graphic processing unit (GPU), and an audio processor. The CP may be a component of the cellular module of the communication unit 140.

The processor 151 (for example, the AP) may implement various content display methods by using the display control module 131. Hereinafter, a content display method according to various embodiments of the present disclosure will be described in detail.

The electronic device 100 may further include a sensor for detecting a physical quantity (for example, acceleration, gravity, and the like). The sensor may transfer data indicating the detected physical quantity to the controller 150. The controller 150 may recognize a position of the electronic device 100 based on the data received from the sensor, determine a screen display mode as a horizontal mode or a vertical mode based on the position, and control the display unit 110 to display content according to the determined mode. The horizontal mode may be referred to as a landscape mode, and the vertical mode may be referred to as the portrait mode.

In addition, components such as an ear jack, a GPS reception module, a speaker, a microphone, and the like, which have not been mentioned above, may be further included in the electronic device 100. The electronic device 100 may further include an interface unit for a wired connection with an external device. The interface unit may be connected to the external device through a wire (for example, a USB cable). Then, the controller 150 may perform data communication with the external device through the interface unit.

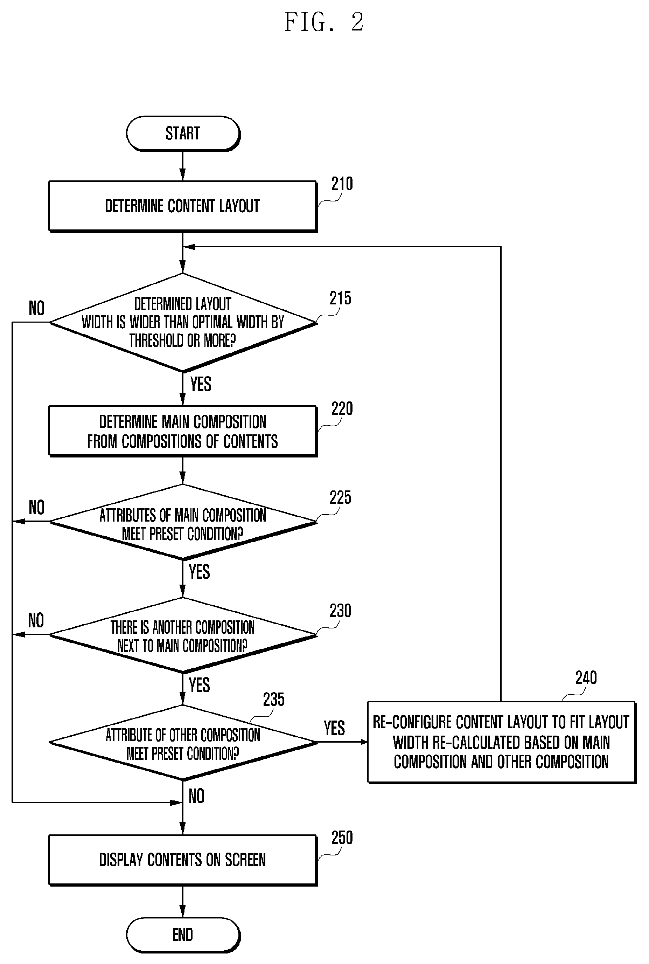

FIG. 2 is a flowchart illustrating a content display method according to various embodiments of the present disclosure.

Referring to FIG. 2, the controller 150 may determine a layout of content to be displayed on the screen in operation 210. Such an operation may include an operation of determining a width of the determined content (that is, layout width) and an operation of determining locations and sizes of compositions of the content, i.e. content areas, according to the layout width and arranging the compositions (in other words, referred to as visual formatting or reflow). A height of the layout of the content may be calculated according to a viewport ratio (for example, width:height = 16: 9). The layout width may be determined as a predetermined value (for example, 980 px). Further, the layout width may be determined as a device width defined in additional information (for example, viewport meta tag and cascading style sheet (CSS) device adaptation) related to the corresponding contents. For example, when the screen resolution is determined as 1280x800 corresponding to the logical size and the screen is in the landscape mode (that is, "1280" is the width), if the electronic device 100 receives content defined as <meta name="viewport" width="device-width"> from an external device, the layout width may be determined as 1280. When the screen is in the portrait mode, the layout width may be determined as 800.

In operation 215, the controller 150 may determine whether the determined layout width "Wc" is wider than a preset "optimal width (for example, content screen width "Ws") by a preset threshold or more. The content screen may be an entire screen of the display unit 110. Further, the content screen may be a partial area (for example, a browser window) of the screen allocated as a display area. Meanwhile, the composition located in the uppermost part of the content may be referred to as a header and the composition located in the bottommost part of the content may be referred to as a footer. Wc may be determined as widths of compositions located at the center of the layout except for the header and the footer, not the layout width.

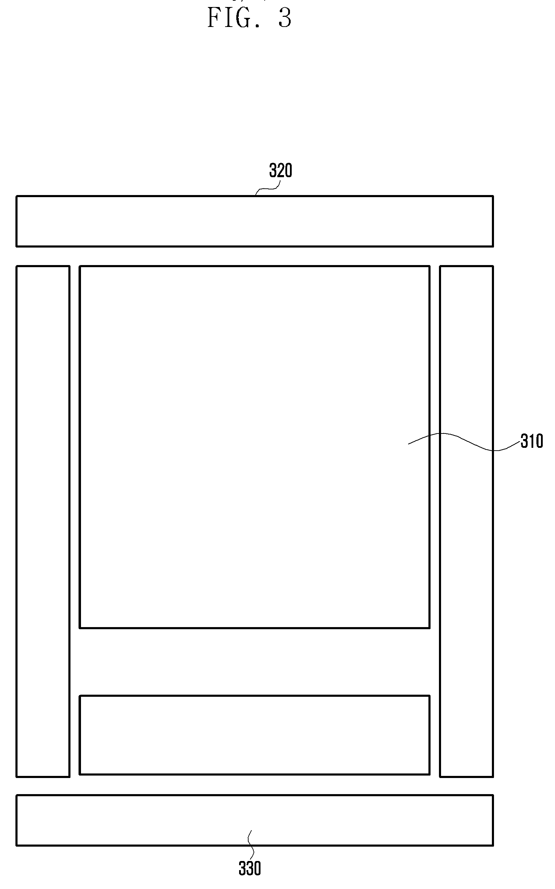

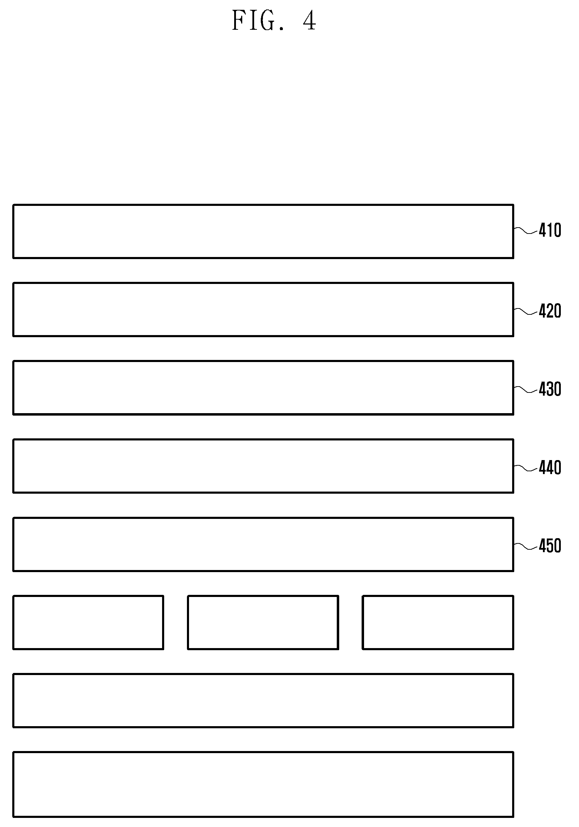

Ws << Wc (that is, when Wc is wider than Ws by the preset threshold or more), the controller 150 may determine one or more of the compositions of the content as main compositions. Examples of operation 220 will be provided through FIGS. 3 and 4 described below.

In operation 225, the controller 150 may determine whether attributes of the main composition, i.e. the main area, meet a preset condition. For example, operation 225 may include an operation of determining whether an area of the main area is larger than a preset threshold area, as the attributes of the main area. Operation 225 may also include an operation of determining whether a width of the main area is larger than a preset threshold width.

When the attributes of the main area meet the preset condition (for example, when the area of the main area is larger than the threshold area), the controller 150 may inspect the content layout and determine whether there is another area next to the main area in operation 230. When there is no other area next to the main area, the controller 150 may perform operation 250 described below.

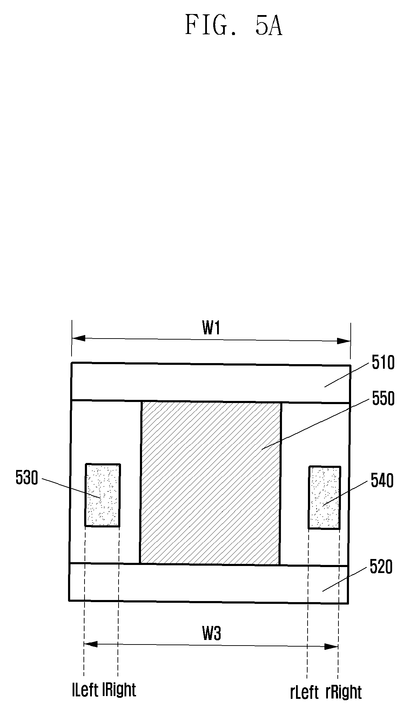

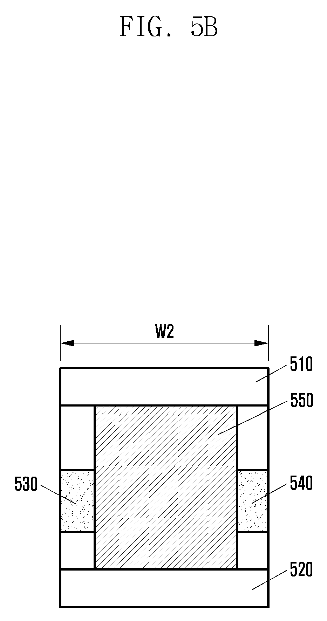

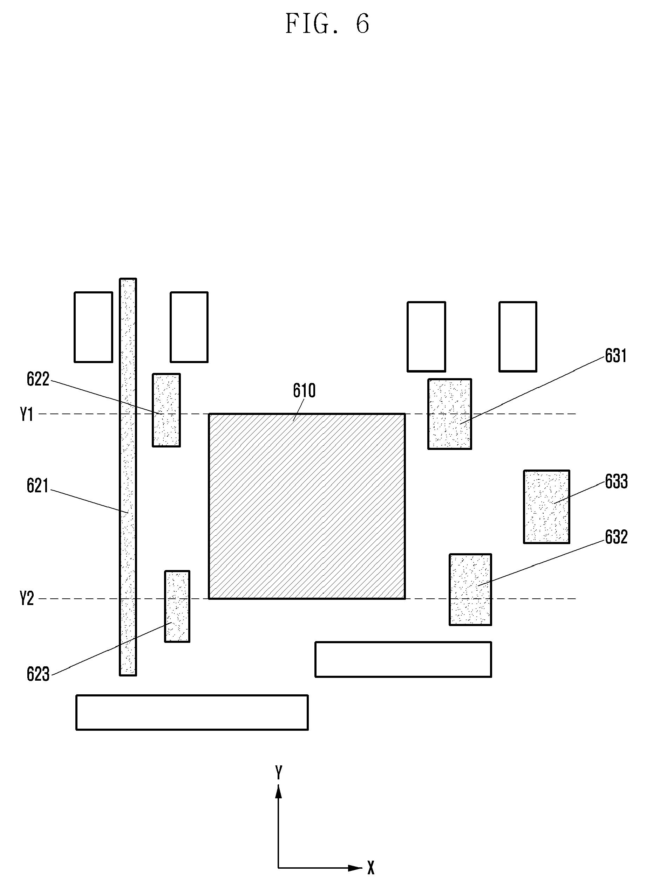

When there is another content area next to the main area, the controller 150 may determine whether attributes of the other area meet the preset condition (for example, size, location, layer to which said other area belongs, display attributes of said other area, and the like) in operation 235. Examples of operation 235 will be provided through FIGS. 5A, 5B, and 6 described below.

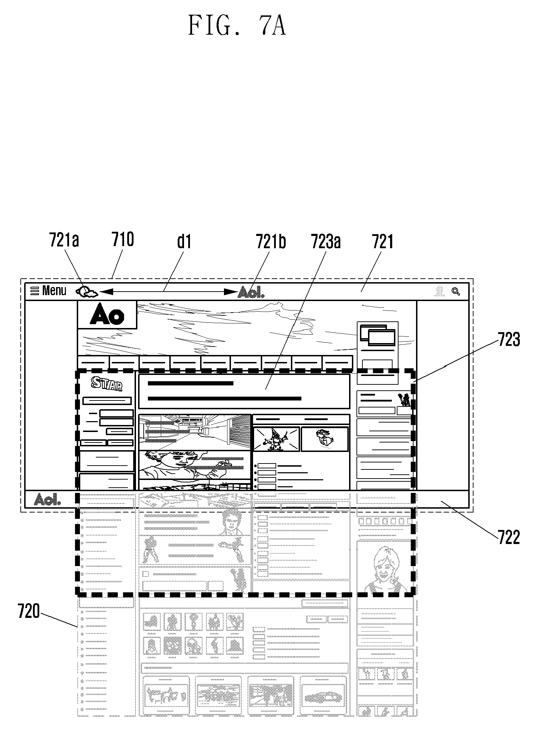

When the attributes of the other area do not meet the preset condition, the controller 150 may perform operation 250. When the attributes of the other area meet the preset condition, the controller 150 may re-configure the content layout according to the layout width recalculated based on the main area and the other area in operation 240. For example, the controller 150 may re-configure the content layout to remove a blank space between the main area and the other area. The controller 150 may re-perform operation 215 after performing operation 240. Meanwhile, when Ws ≤ Wc (that is, when Wc is wider than Ws by a value smaller than the preset threshold) based on a result of the determination in operation 215 or when the attributes of the main area do not meet the preset condition based on a result of the determination in operation 225 (for example, when the area of the main area is equal to or smaller than the threshold area), the controller 150 may control the display unit 110 to display content on the screen in operation 250. Examples of operation 250 will be provided through FIGS. 7A, 7B, 8A, 8B, 9A, 9B, 9C, and 9D described below.

According to various embodiments of the present disclosure, operation 215 may be omitted. For example, the controller 150 may perform operation 220 after determining the content layout regardless of whether the layout width is narrower than the screen width. That is, even though the layout width is wider than the screen width, operation 220 and the following operations may be performed.

FIG. 3 illustrates an example of a content layout and a method of determining a main area according to an embodiment of the present disclosure.

Content (for example, a webpage) may be divided into, for example, a delimiter (for example, a delimiting symbol, a frame, or the like) and a plurality of areas according to the type (for example, an image, text, and the like) of the content included in the corresponding contents. At least one of the areas may be determined as a main area. For example, referring to FIG. 3, the area 310 having the largest size among the areas may be determined as the main area. An area 320 located at the uppermost part among the areas may be determined as a header, and an area 330 located at the bottommost part may be determined as a footer.

FIG. 4 illustrates another example of the content layout and a method of determining a main area according to an embodiment of the present disclosure.

Several areas of the content may be determined as one main area. For example, referring to FIG. 4, when areas 420, 430, 440, and 450 except for a header 410 have widths, which are larger than or equal to a preset threshold, and are successively arranged, the areas may be determined as one main area.

According to various embodiments of the present disclosure, the controller 150 may inspect an amount of the content (for example, the number of letters) included in each area and, as a result, may determine the area having the largest content as the main area.

According to various embodiments of the present disclosure, the controller 150 may determine the main area based on a location of the area. For example, a area closest to the center of the layout, among the areas may be determined as the main area.

FIGS. 5A and 5B illustrate another example of the content layout and a method of re-configuring the content layout according to an embodiment of the present disclosure.

Referring to FIG. 5A, the layout having a width of "W1" may include a header 510, a footer 520, and a left area 530, a right area 540, and a center area 550, located between the header 510 and the footer 520. The controller 150 may determine the center area 550 as the main area based on the determination method illustrated through FIGS. 3 and 4. Thereafter, the controller 150 may discover that the areas 530 and 540 exist on both sides of the center area 550 and determine whether the areas 530 and 540 are another main area (that is, the areas 530 and 540 are another important main area in addition to the previously determined main area). According to an embodiment of the present disclosure, the controller 150 may calculate a width of the left area 530 (lLeft - lRight) and, when the calculated width is larger than or equal to a preset threshold width, determine the left area 530 as one of the main areas. Further, the controller 150 may calculate a width of the right area 540 (rLeft - rRight) and, when the calculated width is larger than or equal to a preset threshold width, determine the right area 540 as another one of the main areas. Meanwhile, when the calculated width is smaller than the threshold width, the corresponding area may be excluded from the main area.

Referring to FIG. 5B, the controller 150 may identify that there is a blank space between the center area 550 and one or more areas (for example, the areas 530 and 540) and re-arrange the areas 530 and 540 to make the blank space removed. The controller 150 may determine the center area 550 and the areas 530 and 540 as the main areas. In addition, the controller 150 may narrow the layout width from "W1" to "W2" (width of the newly determined main area) and re-arrange elements within the header 510 and elements within the footer 520 according to the width "W2".

According to various embodiments of the present disclosure, the operation of removing the blank space may be omitted. Then, the width "W3 (lLeft - rRight)" of the areas 530 and 540 may be determined as the width of the main area. The layout width may be changed from "W1" to "W3", and the elements within the header 510 and the elements within the footer 520 may be re-arranged according to the width "W3".

According to the above embodiments of the present disclosure, the width of the main area may be determined as, for example, the width of the center area 550, that is, W2 or W3. According to various embodiments of the present disclosure, when it is desired to change content according to a condition such as a media query, the width of the main area may be further expanded beyond W2 or W3. For example, when the determined width is 1000 but there is a condition to change content according to 1100, the width is expanded to 1100 rather than 1000 and thus it is possible to prevent some areas of the content from being not shown. The media query may be a web standard for flexibly changing the page layout according to the device resolution. For example, with respect to a tag of "#img" for style definition, when a horizontal width of the device is 1000 pixels or more, the image is displayed with 300 px and thus has different sizes in landscape/portrait modes in a 1280x800 device. As described above, since the content may be changed according to the width of the device, it may be desirable to identify the media query.
@ media (max-width:1000px){#img{width:300px;}
@media (max-width:800px){#img{width:200px}

FIG. 6 illustrates another example of the content layout and an example unsuitable for the main area according to an embodiment of the present disclosure.

Referring to FIG. 6, areas 621, 622, and 623 may exist on the left side of a main area 610, and areas 631, 632, and 633 may exist on the right side of the main area 610.

Whether the areas may be included in the main area may be determined based on locations of the corresponding areas. For example, it is assumed that a y coordinate of an upper side of the area 610 is "Y1" and a y coordinate of a lower side of the area 610 is "Y2". When the area next to the main area 610 exists in the range between "Y1" and "Y2", the corresponding area may be determined as the main area. In other words, when an upper side of any area is located below the upper side of the main area 610 and a lower side of the area is located above the lower side of the main area 610, the corresponding area may be determined as another main area. Based on the above description, since the areas 621, 622, 623, 631, and 632 partially escape the range of "Y1 - Y2", the areas 621, 622, 623, 631, and 632 may be excluded from the main area.

According to various embodiments of the present disclosure, whether the area may be included in the main area may be determined based on an area of the corresponding area. For example, the controller 150 may calculate an area of the area 633, determine the corresponding area as one of the main areas when the calculated area is larger than or equal to a preset threshold area, and exclude the corresponding area when the calculated area is smaller than the threshold area.

According to various embodiments of the present disclosure, whether the area may be included in the main area may be determined based on the type of the corresponding area. For example, the controller 150 may analyze text contained in the corresponding area and, when a word (for example, word related to an advertisement) unsuitable for the main area is found based on a result of the analysis, exclude the corresponding area from the main area. When no word unsuitable for the main area is found (that is, when the type of the corresponding area is configured as the type of the main area), the corresponding area may be determined as the main area. The controller 150 may analyze additional information (for example, link information) related to the corresponding area and, when the additional information is unsuitable based on a result of the analysis (for example, when a linked site is included in an already known harmful site list), the corresponding area may be excluded from the main area. The harmful site list may exist in a local DB (for example, the storage unit 130). Of course, the harmful site list may exist in an external device and, accordingly, the controller 150 may access the external device through the communication unit 140 to identify the harmful site list. Meanwhile, when the additional information is suitable (for example, when the linked site is not included in the harmful site list), the corresponding area may be determined as one of the main areas.

According to various embodiments of the present disclosure, whether the area may be included in the main area may be determined based on at least two or more of the above conditions (that is, width, area, location, and type). For example, when the width meets the condition as the main area but the area does not, the corresponding area may be excluded from the main area. When the width, area, and location meet the condition as the main area but the type is not configured as the type of the main area, the corresponding area may be excluded from the main area. When the type is configured as the type of the main area, the corresponding area may be determined as the main area even though the width, area, and location do not meet the condition as the main area.

According to various embodiments of the present disclosure, whether the area may be included in the main area may be determined based on display attributes of the corresponding area. For example, the area having display attributes of "absolute" may be determined to be distinguished (or independent) from the "main area". Such a area may be determined as another one of the main areas. Alternatively, the area may be determined as another one of the main areas after separate processing (for example, removing the blank space between areas). The area having the display attributes of "fixed" may be determined as being irrelevant to the "main area". When attributes of any area are "animation", the corresponding area may be determined as the main area. Reversely, the area having the attributes of "animation" may be excluded from the main area.

According to various embodiments of the present disclosure, areas of the content may be divided according to each layer. For example, a layer of the area existing next to the main area is different from a layer of the main area, the corresponding area may be excluded from the main area. When the layer of the area existing next to the main area is the same as the layer of the main area, the controller 150 may determine whether attributes of the corresponding area meet a preset condition (for example, size, location, type, display attributes, and the like) in operation. When the condition is met, the corresponding area may be determined as another one of the main areas.

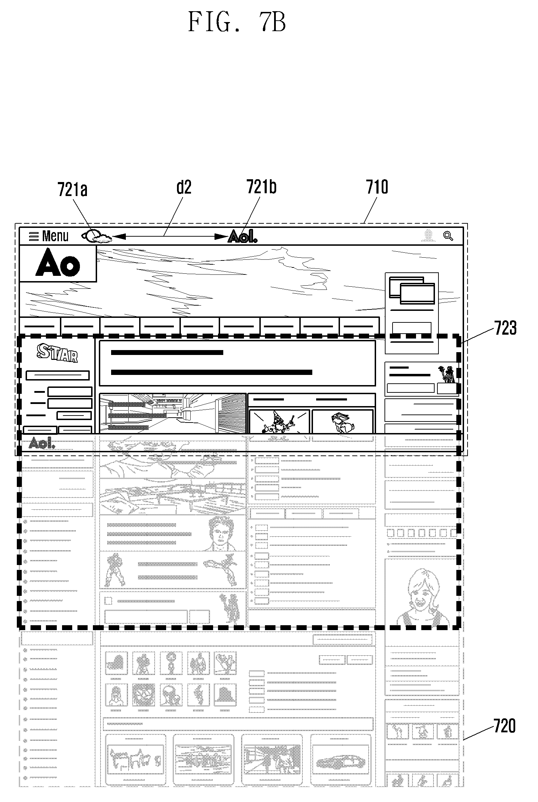

FIGS. 7A and 7B illustrate screens for describing a layout re-configuration method according to an embodiment of the present disclosure.

Referring to FIG. 7A, a webpage 720 may be displayed on the screen, for example, a browser window 710. The webpage 720 may include a header 721, a footer 722, and a area 723. The header 721 may be displayed on an upper part of the browser window 710, the footer 722 may be displayed on a lower part of the browser window 710, and a part 723a of the area 723 may be displayed between the header 721 and the footer 722. Meanwhile, the header 721 and the footer 722 may be displayed such that the widths of the header 721 and the footer 722 fit the width of the browser window 710. Since the width of the area 723 is narrower than the width of the browser window 710, a blank space may be generated next to the area 723.

Referring to FIG. 7B, the controller 150 may re-configure the layout of the webpage 720 based on the width of the screen. For example, when the logical size of the screen 710 is 1280x800, the layout width of the webpage may be 1280 according to the screen size. Thereafter, the controller 150 may determine the area 723 as the main area. When the width of the main area 723 is 1000, the controller 150 may change the layout width from 1280 to 1000. The controller 150 may control each of the widths of the header 721 and the footer 722 according to the changed width. For example, the controller 150 may control an interval between elements 721a and 721b of the header 721 from "d1" to "d2 (d2 < d1)". Thereafter, the controller 150 may expand the webpage 720 to fit the screen width of which the layout has been re-configured and control the display unit 110 to display the expanded webpage 720.

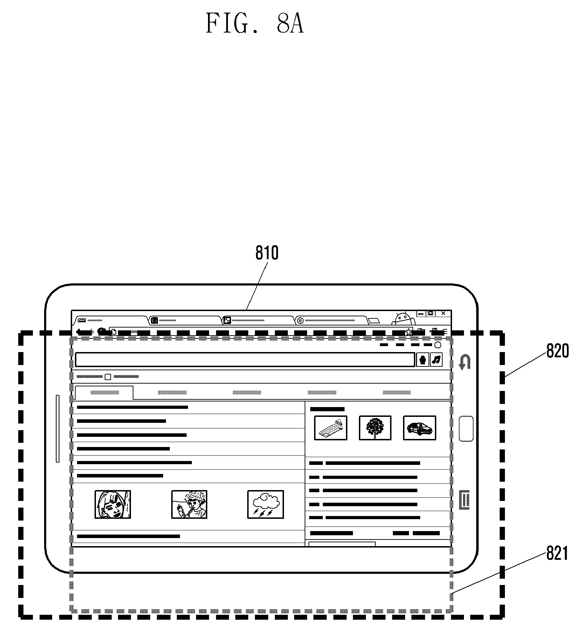

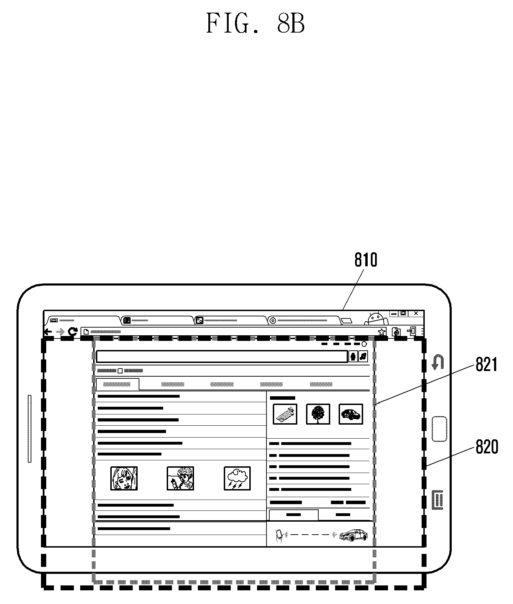

FIGS. 8A and 8B illustrate screens for describing a method of zooming a main area in a webpage according to an embodiment of the present disclosure.

Referring to FIG. 8A, a part of a webpage 820 (including a part of a main area 821 as illustrated in FIG. 8A), may be displayed to fit a width of a screen 810. The controller 150 may recognize a zoom-out gesture (for example, a user's action of touching two fingers on the screen and then bring them closer together (that is, pinch in)) through the touch panel 111.

Referring to FIG. 8B, the controller 150 may reduce the webpage 820 in response to the zoom-out gesture and control the display unit 110 to display a part of the reduced webpage 820 (including a part of the reduced main area 821 as illustrated in FIG. 8B) on the screen. Thereafter, when a zoom-in gesture (for example, a user's action of touching two fingers on the screen and then moving them apart (that is, pinch out)) is recognized, the controller 150 may expand the webpage 820 to fit the width of the screen 820 as illustrated in FIG. 8A and control the display unit 110 to display a part of the expanded webpage 820.

When there is a blank space due to the layout width of the content being narrower than the screen width, the content layout may be re-configured to remove the blank space (see FIGS. 7A and 7B, and related description) or the main area may be expanded to fit the screen width (see FIG. 8 and related description). However, according to various embodiments of the present disclosure, some information may be added to the blank space without the re-configuration of the layout or without the zoom-in gesture even though the re-configuration of the layout is performed.

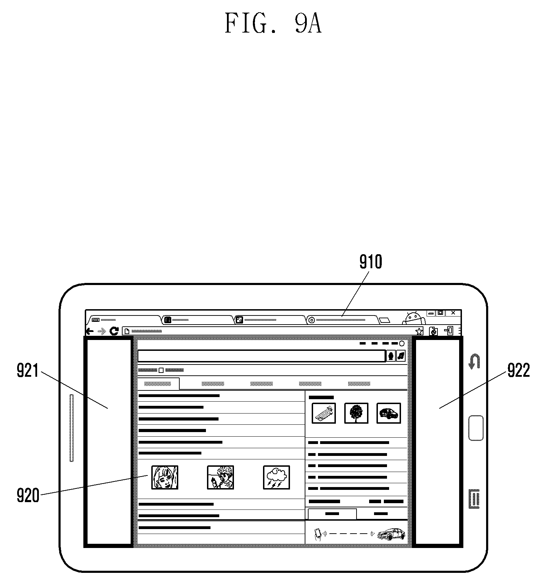

FIGS. 9A to 9D illustrate screens for describing a method of displaying additional information in a blank space existing next to the main area in the webpage according to an embodiment of the present disclosure.

Referring to FIG. 9A, a part of the webpage (for example, a header 910 and a part 920 of the main area) may be displayed on the screen. When the screen width is relatively wider than the width of the main area, blank spaces 921 and 922 may appear next to the part 920 of the main area.

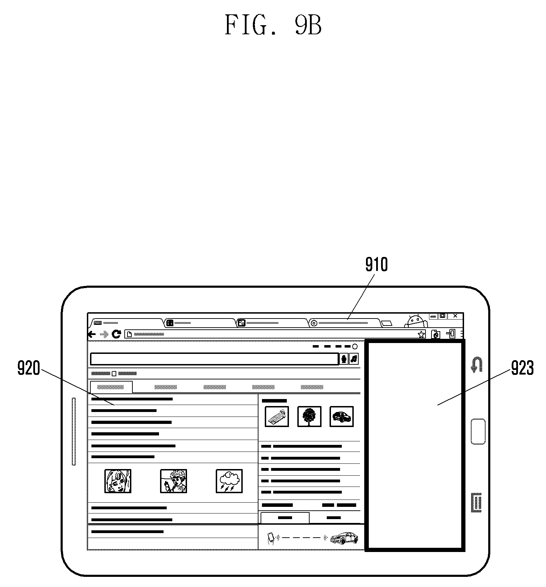

The controller 150 may control a location of the part 920 of the main area. For example, referring to FIG. 9B, the controller 150 may control the display unit 110 to display the part 920 of the main area on the leftmost side of the screen.

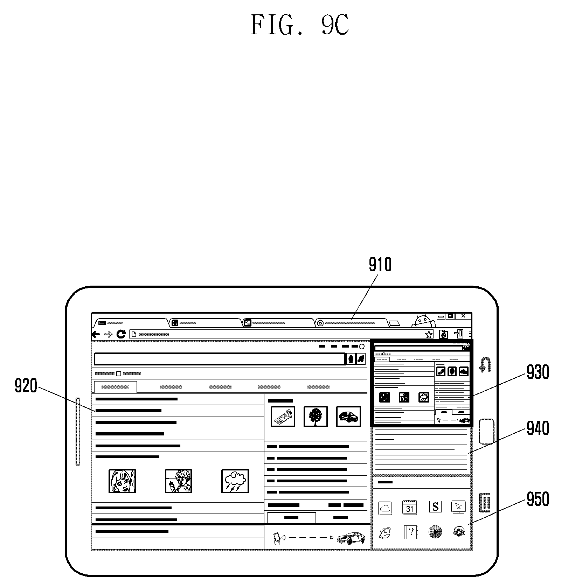

Referring to FIG. 9C, the controller 150 may arrange additional information in a blank space 923. For example, in the blank space 923, a minimap 930 of the corresponding webpage, some areas 940 (for example, article) of the corresponding webpage, and quick access information 950 (for example, application list) may be arranged.

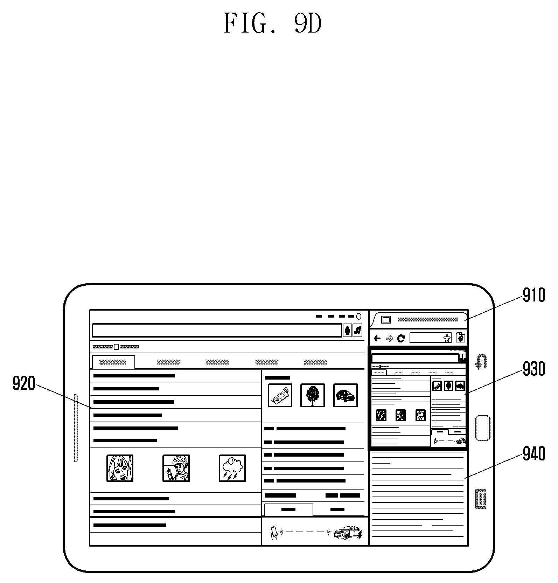

When there is a blank space after the content layout is re-configured, the controller 150 may re-arrange additional information in the blank space. For example, referring to FIG. 9D, the controller 150 may re-configure elements of the header 910 to arrange the elements on the upper part of the blank space 923 and additional information (for example, the minimap 930 and some areas 940) below the elements.

Meanwhile, the additional information may be a bookmark, a history (for example, a list of visited webpages), a website list related to the currently displayed webpage, an article list related to the currently displayed article, and information or a search result related to the main area of the currently displayed webpage as well as the above described information.

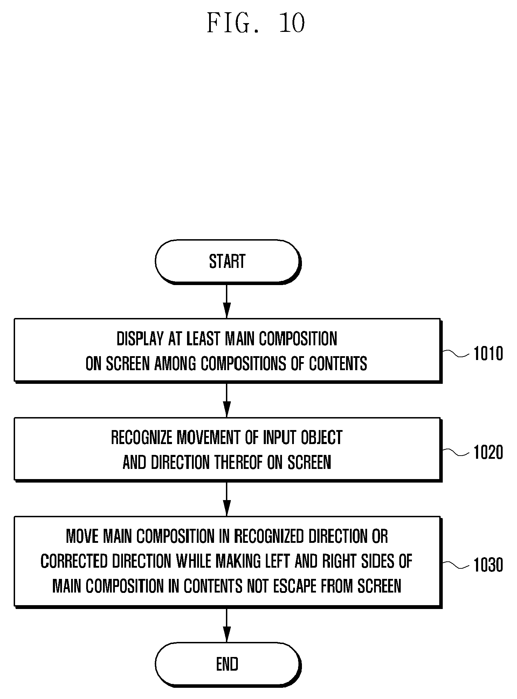

FIG. 10 is a flowchart illustrating a method of moving content according to various embodiments of the present disclosure.

Referring to FIG. 10, the controller 150 may control the display unit 110 to display at least a main composition, i.e. a main area, among compositions of the content on the screen in operation 1010.

In operation 1020, the controller 150 may recognize a movement of an input object (for example, a finger or a pen) and a direction thereof through the touch panel 111.

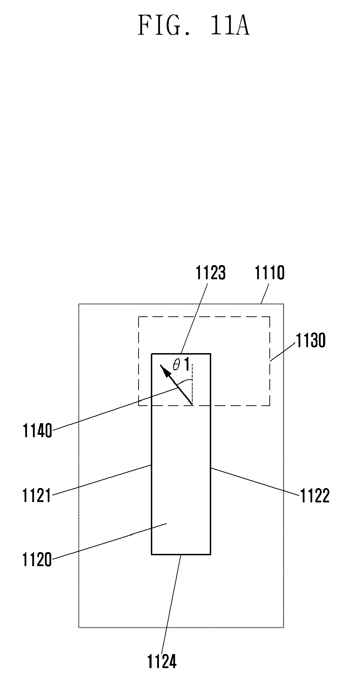

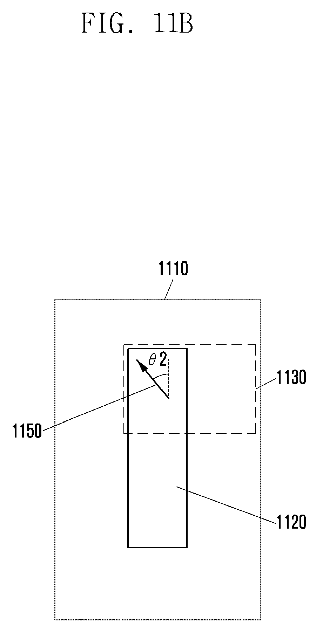

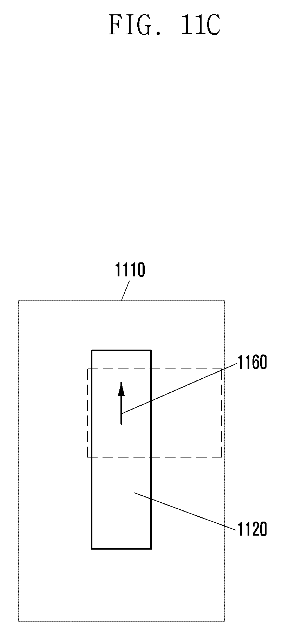

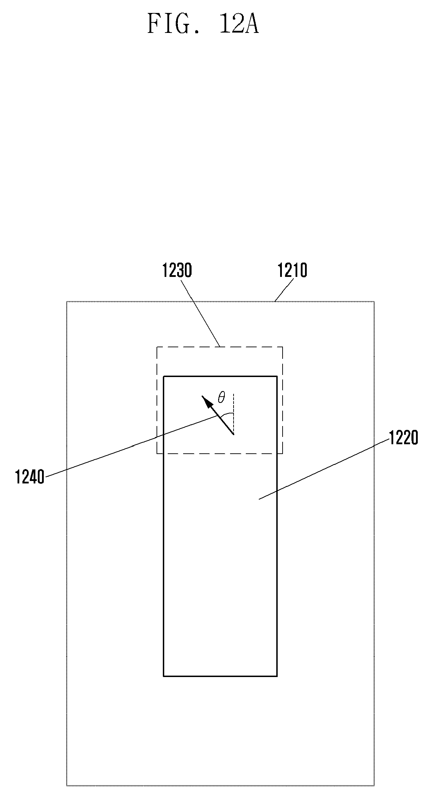

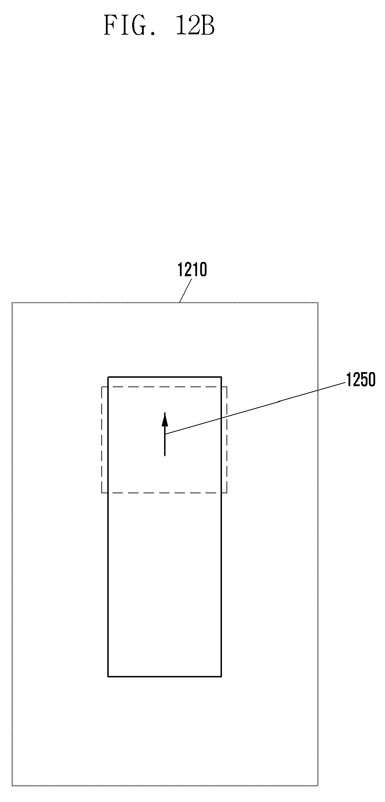

In operation 1030, the controller 150 may move the content in the recognized direction (or corrected direction) while making left and right boundaries of the main composition not go beyond left and right boundaries of the screen in response to the movement. Examples of operation 1030 will be provided through FIGS. 11 and 12 described below.

FIGS. 11A to 11C illustrate an example of a method of moving content while the boundary of the main composition, i.e. the main area, does not escape from the screen according to an embodiment of the present disclosure.

Referring to FIG. 11A, content 1110 includes a main area 1120. The main area 1120 includes a left side 1121 and a right side 1122, which determine a width of the main area 1120, and an upper side 1123 and a lower side 1124, which determine a height of the main area 1120. The sides may be defined as the boundary for being distinguished from other areas. A part of main area 1120 including a part of the left side 1121 and a part of the right side 1122 may be displayed on a screen 1130.

In response to a movement of an input object, the controller 150 may acquire a value indicating a direction 1140 of the movement. For example, the controller 150 receives an event corresponding to the movement from the touch panel 111. The event may include a movement value "x" in an x axis direction and a movement value "y" in a y axis direction. The controller 150 may calculate a value (for example, an angle (θ1)) indicating the direction 1140 of the movement from "x" and "y". When it is determined that the boundary of the main area 1120 does not escape from the screen 1130, the controller 150 may move the content 1110 in the direction 1140.

Referring to FIG. 11B, in a case of x < y (that is, when a vertical component is larger than a horizontal component in the direction 1140 of the movement), if the content 1110 move in the direction 1140, the controller 150 may determine whether the boundary of the main area 1120 escapes from the screen 1130. When it is determined that the boundary escapes from the screen 1130, the controller 150 may correct the direction 1140. For example, the controller 150 may correct x into x' (that is, reduce the value of the horizontal component) and calculate "θ2", which is a value indicating a corrected direction 1150, from x' and y. The controller 150 may move the content 1110 in the corrected direction 1150.

Referring to FIG. 11C, the controller 150 may determine whether the boundary of the main area 1120 is close to the boundary of the screen. When the two boundaries are close to each other (for example, when an interval between the two boundaries is smaller than a preset threshold interval), the controller 150 may move the content 1110 in a vertical direction 1160 (that is, a corrected direction from which the horizontal component is removed).

FIGS. 12A and 12B illustrate another example of the method of moving content while the boundary of the main area does not escape from the screen according to an embodiment of the present disclosure.

Referring to FIGS. 12A and 12B, a main area 1220 of content 1210 may be displayed to fit a width of a screen 1230. The controller 150 may acquire a value (for example, angle (θ)) indicting a direction 1240 of a movement. When a vertical component of the direction 1240 is larger than a horizontal component of the direction 1240, the controller 150 may move the content 1210 in a vertical direction 1250.

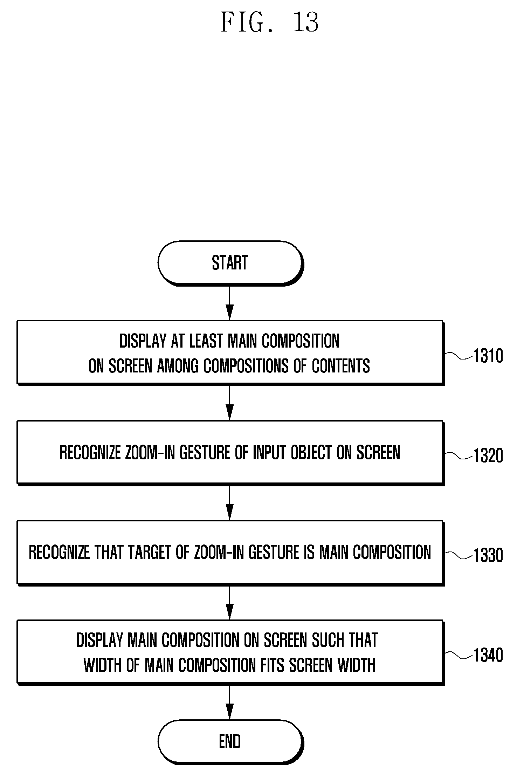

FIG. 13 is a flowchart illustrating a method of expanding the main area to fit the screen width according to various embodiments of the present disclosure.

Referring to FIG. 13, the controller 150 may control the display unit 110 to display at least a main composition, i.e. a main area, among compositions of the content on the screen in operation 1310.

In operation 1320, the controller 150 may recognize a zoom-in gesture of an input object (for example, a finger or a pen) on the screen through the touch panel 111.

In operation 1330, the controller 150 may recognize that a target to be zoomed-in on is the main composition. For example, 1) when a multi-touch is generated within the main composition, 2) when at least one touch of the multi-touch is generated within the main composition, or 3) when at least one touch of the multi-touch is very close to the boundary of the main composition (for example, when an interval between a touch coordinate and the boundary is smaller than a preset threshold interval), the target to be zoomed-in on may be recognized as the main composition of the contents.

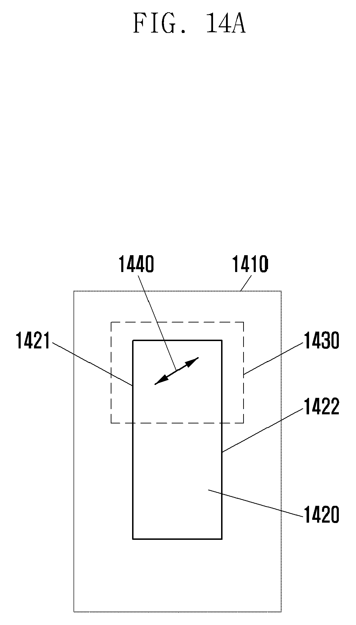

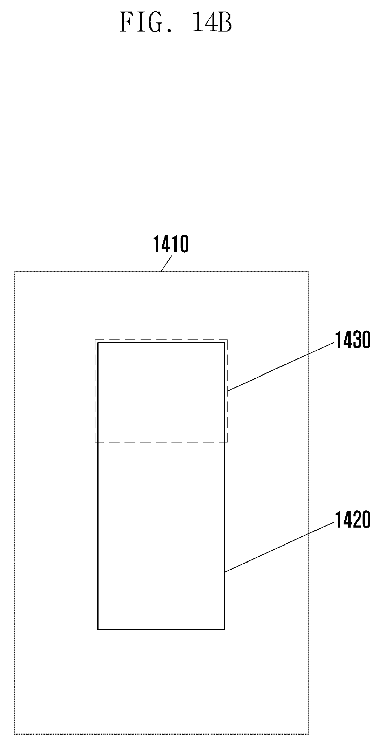

In operation 1340, the controller 150 may expand the main composition such that the width of the main composition fits the screen width and control the display unit 110 to display the expanded main composition. Examples of operation 1340 will be provided through FIG. 14 described below.

FIGS. 14A and 14B illustrate an example of a method of automatically controlling the main composition of the content, i.e. the main area, to fit the screen width according to an embodiment of the present disclosure.

Referring to FIG. 14A, content 1410 includes a main area 1420. A part of main area 1420 including a part of a left side 1421 and a part of a right side 1422 may be displayed on a screen 1430. The controller 150 may recognize generation of a zoom-in gesture 1440 and recognize that a target of the zoom-in gesture 1440 is the main area 1420. Referring to FIG. 14B, when the target to be zoomed-in on is the main area 1420, the controller 150 may enlarge the content 1410 such that the main area 1420 fits the width of the screen 1430.

The "module" used in various embodiments of the present disclosure may refer to, for example, a "unit" including one of hardware, software, and firmware, or a combination of two or more of the hardware, software, and firmware. The "module" may be interchangeable with a term, such as a unit, a logic, a logical block, a component, or a circuit. The "module" may be a minimum unit of an integrated component element or a part thereof. The "module" may be a minimum unit for performing one or more functions or a part thereof. The "module" may be mechanically or electronically implemented. For example, the "module" according to various embodiments of the present disclosure may include at least one of an application-specific integrated circuit (ASIC) chip, a field-programmable gate arrays (FPGAs), and a programmable-logic device for performing operations which have been known or are to be developed hereafter.

According to various embodiments of the present disclosure, at least some of the devices (for example, modules or functions thereof) or the method (for example, operations) according to the present disclosure may be implemented by a command stored in a non-transitory computer-readable storage medium in a programming module form. When the command is executed by processors, the processors may perform a function corresponding to the command. The non-transitory computer-readable storage media may be, for example, the memory of storage unit 130. At least a part of the programming module may be implemented (e.g., executed) by a processor. At least a part of the programming module may include, for example, a module, a program, a routine, a set of instructions and/or a process for performing one or more functions.

The non-transitory computer readable recording medium may include magnetic media such as a hard disc, a floppy disc, and a magnetic tape, optical media such as a compact disc ROM (CD-ROM) and a DVD, magneto-optical media such as a floptical disk, and hardware devices specifically configured to store and execute program commands, such as a ROM, a RAM, and a flash memory. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying content in an electronic device comprising a screen, the content being divided into a plurality of areas, the method comprising:
determining a layout of the content;
determining at least one of the areas as a first main area;
determining a layout width of the content such that a width of the first main area is narrower than or equal to a viewport width of the screen of the electronic device; and
displaying, on the screen of the electronic device, the first main area of the content.

2. The method of claim 1, further comprising:
if there is a second area next to the first main area, determining whether attributes of the second area meet a preset condition;
if the second area meets the preset condition, determining the second area as a second main area;
re-determining the layout width of the content such that the width of the first main area and a width of the second main area are narrower than or equal to the viewport width; and
displaying, on the screen of the electronic device, the first main area and the second main area of the content of which the layout width has been re-determined.

3. The method of claim 2, wherein the second area is determined as the second main area if at least one of a width, an area, a location, and a type of the second area meets the preset condition.

4. The method of claim 2 or 3, further comprising:
determining the width of the first main area and the width of the second main area by removing a blank space between the first main area and the second main area.

5. The method of any preceding claim, further comprising:
changing a width of each of a header and a footer in the content into the width of the first main area.

6. The method of any preceding claim, wherein the displaying of the first main area on the screen of the electronic device comprises:
expanding the first main area such that the width of the first main area fits the viewport width of the screen, and
displaying the expanded first main area.

7. The method of any preceding claim, further comprising:
recognizing a movement of an input object on the screen through a touch panel of the electronic device; and
in response to the movement, moving the content while keeping a left boundary of the first main area within a left boundary of the screen and a right boundary of the first main area within a right boundary of the screen.

8. The method of any preceding claim, further comprising:
recognizing a zoom-in gesture on the screen through a touch panel of the electronic device; and
in response to the zoom-in gesture, expanding the first main area such that the width of the first main area fits the viewport width of the screen and displaying the expanded first main on the screen.

9. An electronic device comprising:
an electronic storage configured to store content divided into a plurality of areas;
a display component configured to display, on a screen, at least a part of the content, a layout of which has been determined; and
a controller configured to:
determine at least one area of the content as a first main area, and
determine a layout width of the content such that a width of the first main area is narrower than or equal to a viewport width of the screen.

10. The electronic device of claim 9, wherein the controller is configured to determine a second area as a second main area, if the second area is next to the first main area and meets a preset condition, and further configured to re-determine the layout width of the content such that the width of the first main area and the width of the second main area are narrower than or equal to the viewport width of the screen.

11. The electronic device of claim 10, wherein the controller is configured to determine the second area as the second main area if the width of the second area is larger than or equal to a preset threshold width.

12. The electronic device of claim 10 or 11, wherein the controller is configured to determine the second area as the second main area if the area of the second area is larger than or equal to a preset threshold area.

13. The electronic device of claim 10, 11 or 12, wherein the controller is configured to determine the second area as the second main area if an upper side of the second area is located below an upper side of the first main area and a lower side of the second area is located above a lower side of the first main area.

14. The electronic device of any of the claims 10-13, wherein the controller is configured to determine the second area as the second main area if the content type of the second area corresponds to the content type of the main area.

15. The electronic device of any of the claims 9-14, wherein the display component comprises a touch panel, and:
- the controller is configured to recognize a movement of an input object on the screen through the touch panel and to move the content while keeping a left boundary of the first main area within a left boundary of the screen and a right boundary of the first main area within a right boundary of the screen in response to the movement; and/or
- the controller is configured to recognize a zoom-in gesture on the screen through the touch panel and to expand the first main area such that the width of the first main area fits the width of the screen in response to the zoom-in gesture.
